(19) Europäisches Patentamt
European Patent Office
Office européen des brevets

(11) Veröffentlichungsnummer: **0 036 116**
**B1**

(12) # EUROPÄISCHE PATENTSCHRIFT

(45) Veröffentlichungstag der Patentschrift: **18.05.83**

(21) Anmeldenummer: **81101427.3**

(22) Anmeldetag: **27.02.81**

(51) Int. Cl.³: **C 09 B 41/00,** C 09 B 29/036 // C09B29/09, C09B29/40, C09B29/44

(54) **Verfahren zur Herstellung von Azofarbstoffen.**

(30) Priorität: **11.03.80 DE 3009266**

(43) Veröffentlichungstag der Anmeldung: **23.09.81 Patentblatt 81/38**

(45) Bekanntmachung des Hinweises auf die Patenterteilung: **18.05.83 Patentblatt 83/20**

(84) Benannte Vertragsstaaten: **BE CH DE FR GB IT LI**

(56) Entgegenhaltungen:
**DE-A-2 816 350**
**FR-A-2 263 232**
**GB-A-1 369 945**
**GB-A-2 009 209**
**GB-A-2 009 212**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Kühlthau, Hans-Peter, Dr., Paul-Klee-Strasse 48, D-5090 Leverkusen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

# Verfahren zur Herstellung von Azofarbstoffen

Gegenstand der Erfindung ist ein Verfahren zur Herstellung von Azofarbstoffen der Formel

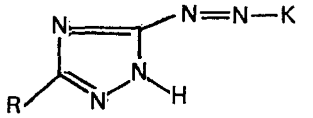

I,

worin

R für Wasserstoff, gegebenenfalls substituiertes Alkyl, Aralkyl, Cycloalkyl oder Aryl und

K für den Rest einer Kupplungskomponente stehen,

durch gleichzeitige Umsetzung von Aminotriazolen der Formel

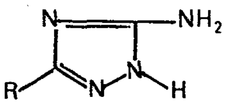

II,

Natriumnitrit und Kupplungskomponenten der Formel

HK III

in Wasser oder wässrigen organischen Lösungsmitteln bei pH-Werten von $4<pH<6$.

In den Formeln sind unter Alkylresten insbesondere $C_1$- bis $C_4$-Alkylreste zu verstehen. Die Alkylreste können nichtionische Substituenten tragen. Als solche sind beispielsweise Halogen, Hydroxy, Cyan, $C_1$- bis $C_4$-Alkoxy, $C_1$- bis $C_4$-Alkoxycarbonyl, $C_1$- bis $C_3$-Alkylcarbonyloxy, Aminocarbonyl, Phenoxy, Benzyloxy, Benzoyloxy, Mono- und Di-($C_1$- bis $C_2$-alkyl)-amino, Mono- und Di-($C_1$- bis $C_2$-alkyl)-aminocarbonyl, Phenoxyalkoxy, Phenoxycarbonyloxy oder Phenylaminocarbonyloxy zu verstehen.

Unter Halogen ist vorzugsweise Fluor, Chlor oder Brom zu verstehen.

Geeignete Arylreste sind insbesondere ein gegebenenfalls substituierter Phenyl- oder Naphthylrest.

Geeignete Aralkylreste sind insbesondere ein gegebenenfalls substituierter Benzyl, α- oder β-Phenylethyl-, α-, β- oder γ-Phenylpropylrest.

Unter Cycloalkyl wird vorzugsweise Cyclohexyl verstanden.

Geeignete Substituenten dieser Isocyclen sind die oben genannten Substituenten der Alkylreste und ausserdem $C_1$- bis $C_4$-Alkyl.

Geeignete organische Lösungsmittel sind beispielsweise: wasserlösliche Lösungsmittel, z.B. Alkohole, wie Methanol, Ethanol, Propanol, Isopropanol, Butanol, Amylalkohole; Glykole, wie Ethylenglykol, Propylen- und Butylenglykole; Polyethylenglykole; Glykolether, wie Ethylglykol; Glykolester, wie Methyl- und Ethylglykolacetat; Ketone, wie Aceton, Methylethylketon; Carboxyamide, wie Formamid, Dimethylformamid, Dimethylacetamid, Tetramethylharnstoff; Sulfolane, wie Tetrahydrothiophendioxid; Nitrile, wie Acetonitril, Ethylencyanhydrin; Ether, wie Dioxan, Tetrahydrofuran; Dimethylsulfoxid; N-Methylpyrrolidon; Hexamethylphosphorsäuretriamid oder wasserunlösliche Lösungsmittel, z.B. Nitrobenzol, und deren Gemische.

Geeignet sind anorganische und organische Säuren, vor allem niedere Fettsäuren, wie z.B. Ameisensäure, Propionsäure und besonders bevorzugt Essigsäure.

Ein bevorzugter pH-Bereich liegt zwischen pH 4,5 und 5,5.

Im allgemeinen wird das Verfahren unter Kühlung begonnen und dann bei etwas höheren Temperaturen ausgekuppelt. Man kann so vorgehen, dass man das neue Verfahren durch gleichzeitige Diazotierung eines Aminotriazols der Formel II und Kupplung auf eine Kupplungskomponente KH bei −10 bis +5°C, beispielsweise bei −5°C, beginnt und die Kupplung durch langsames Erwärmen auf 15-55°C, beispielsweise bei 20°C, zu Ende führt.

Die Zugabe der Reagentien ist an keine bestimmte Reihenfolge gebunden. Man kann z.B. Aminotriazole und $NaNO_2$ in Wasser vorlegen, wobei das Reaktionsvolumen erheblich verkleinert werden kann, wenn ein Teil des Wassers durch ein anderes Lösungsmittel ersetzt wird, dann ein Gemisch einer Kupplungskomponente und soviel Säure eintropfen, dass ein pH-Wert unter 6, jedoch über 4 eingestellt wird.

Ebenso kann man z.B. in einem Lösungsmittel nahezu äquivalente Mengen Säure, Aminotriazol und einer Kupplungskomponente vorlegen und dazu eine wässrige Natriumnitritlösung tropfen. Als zweckmässig hat es sich bei diesem Verfahren erwiesen, anschliessend noch soviel Säure einzutropfen, dass ein pH-Wert von ca. 5 eingestellt wird. Da mit fortschreitender Reaktion die meist flüssige Kupplungskomponente einem Feststoff, dem Azofarbstoff, Platz macht, das Reaktionsmedium also steifer wird, wird zweckmässigerweise allmählich soviel Wasser eindosiert, dass eine Rührbarkeit erhalten bleibt.

Gute Ergebnisse erhält man auch, wenn man in einem Lösungsmittel ein Aminotriazol, eine Kupplungskomponente und Natriumnitrit vorlegt und dann Säure eintropft.

Günstig wirkt sich die Gegenwart eines Emulgators bzw. Dispergiermittels aus.

Geeignete Aminotriazole der Formel II sind z.B.:

3-Amino-1,2,4-triazol, 3-Amino-5-methyl-1,2,4-triazol, 3-Amino-5-ethyl-1,2,4-triazol, 3-Amino-5-phenyl-1,2,4-triazol, 3-Amino-5-cyclohexyl-1,2,4-triazol, 3-Amino-5-phenoxymethyl-1,2,4-triazol, 3-Amino-5-benzyl-1,2,4-triazol.

Geeignete Kupplungskomponenten KH sind insbesondere die der Benzol-, Indol-, Indolin- und Tetrahydrochinolinreihe, z.B. die Verbindungen der Formeln

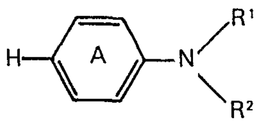

IV und

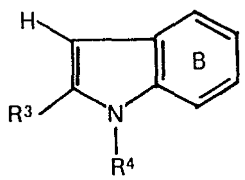

V,

worin

$R^1$ für H oder eine gesättigte oder ungesättigte $C_1$- bis $C_8$-Alkylgruppe, die durch $R^5$ substituiert sein kann,

$R^2$ für Phenyl, Naphthyl oder eine gesättigte oder ungesättigte $C_1$- bis $C_8$-Alkylgruppe, die durch $R^5$ substituiert sein kann,

$R^5$ für Halogen, Hydroxy, $C_1$- bis $C_4$-Alkoxy, Cyan, Acetoxy, Di-$C_1$- bis $C_3$-alkyl)-amino, $C_1$- bis $C_2$-Alkoxycarbonyloxy, $C_1$- bis $C_4$-Alkoxycarbonyl, Aminocarbonyl, Mono- und Di-($C_1$- bis $C_2$-alkyl)-aminocarbonyl, Cyclohexyl, Cyclohexyloxy, Phenyl, Naphthyl, Phenoxy, Naphthoxy, Benzoyloxy, Phenoxyalkyloxy, Phenoxycarbonyloxy, Phenylaminocarbonyloxy, Benzoyl oder Thiophenyl stehen und

die aromatischen Ringe in $R^1$, $R^2$ und $R^5$ ihrerseits Substituenten, wie Chlor, Methyl, Ethyl, Methoxy, Ethoxy, Phenyl oder Cyclohexyl tragen können,

$R^1$ und $R^2$ zusammen mit dem N-Atom einen Ring, beispielsweise zum Pyrrolidin, Piperidin, Piperazin oder Morpholin, schliessen können,

$R^1$ und $R^2$ zum Ring A ringgeschlossen sein können, so dass z.B. ein gegebenenfalls durch Methyl, Chlor oder Methoxy substituiertes Indolin-, Tetrahydrochinolin-, Benzomorpholin- oder Carbazolringsystem entsteht,

die Ringe A und B beispielsweise durch $C_1$- bis $C_4$-Alkyl, Halogen, $C_1$- bis $C_3$-Alkoxy, Acetylamino, Trifluormethyl, $C_1$- bis $C_2$-Alkylsulfonyl oder Cyan substituiert sein können, zwei benachbarte Substituenten des Ringes A miteinander ringgeschlossen sein können, so dass zusammen mit dem Ring A ein Tetrahydronaphthalin-, ein Naphthalin- oder ein heterocyclisches Ringsystem entsteht,

$R^3$ Methyl, Ethyl oder Phenyl und

$R^4$ H, Benzyl oder Alkyl, welches beispielsweise durch $R^5$ substituiert sein kann, bedeuten.

Geeignete Verbindungen IV und V sind z.B.: Dimethylanilin, N,N-Dimethyl-m-anisidin, N,N-Diethyl-m-anisidin, N,N-Diethyl-3-chlor-anilin, N,N-Diethyl-2-chlor-anilin, Dipropylanilin, N,N-Diethyl-o-anisidin, N,N-Dibutyl-2-chlor-anilin, Dibutylanilin, N,N-Diethyl-3-fluor-anilin, N,N-Diethyl-3-trifluormethyl-anilin, N-Ethyl-N-cyanethyl-anilin, N-Butyl-N,β-chlorethyl-anilin, N-Methyl-N-ethyl-2-chlor-anilin, N-Butyl-N,β-hydroxyethyl-anilin, N-Ethyl-N,β-hydroxypropyl-anilin, N-Methyl-diphenylamin, N-Ethyl-N-(2-methoxycarbonyloxyethyl)-anilin, N-Ethyl-N-(2-acetoxyethyl)-anilin, N-Methyl-N,β-cyanethyl-anilin, N,N-Bis-(2-cyanethyl)-anilin, N-Ethyl-N-(2-dimethylaminoethyl)-anilin, N,N-Dimethyl-3-chlor-anilin, 2-Dimethylamino-toluol, 3-Dimethylamino-toluol, 3-Diethylamino-toluol, 3-[N-Ethyl-N-(2-chlorethyl)-amino]-toluol, N-Ethyl-N-(2-hydroxyethyl)-3-methyl-anilin, N,N-Bis-(2-cyanethyl)-3-methyl-anilin, N-Methyl-N-benzyl-anilin, N-Methyl-N-benzyl-2-chlor-anilin, N-Ethyl-N-benzyl-anilin, N-Methyl-N-benzyl-o-anisidin, N-Ethyl-m-tolylbenzyl-amin, 1-Dimethylamino-naphthalin, 1-Diethylamino-naphthalin, 3-Diethylamino-acetanilid, 3-Diethylamino-1-ethoxy-benzol, N,N-Bis-(2-acetoxy-ethyl)-2-ethoxy-5-acetylamino-anilin, 3-Dimethylamino-4-methyl-anisol, N-Ethyl-N,β-phenylaminocarbonyloxyethyl)-anilin, N-Ethyl-N,β-(3-chlorphenylaminocarbonyloxyethyl)-anilin, N-Ethyl-N,β-(4-chlorphenylaminocarbonyloxyethyl)-anilin, N-Ethyl-N,β-(4-methyl-3-chlorphenylamino-carbonyloxyethyl)-anilin, N-Ethyl-N,β-benzoyloxy-ethyl-anilin, N-Ethyl-N,β-phenoxyethyl-anilin, N-Ethyl-N,β-benzyloxyethyl-anilin, N-Ethyl-N,β-cyclohexyloxyethyl-anilin, N-Ethyl-N,β-naphthoxyethyl-anilin, N-Ethyl-N,β-benzoylethyl-anilin, N-Ethyl-N,β-phenoxycarbonyloxyethyl-anilin, N-Ethyl-N,β-(2,5-dichlorbenzoyloxyethyl)-anilin, N-Ethyl-N,β-(p-phenylphenoxyethyl)-anilin, N-Ethyl-N,β-benzoyloxyethyl-3-chlor-anilin, N-Ethyl-N,β-benzoyloxyethyl-m-anisidin, N,N-Dibutyl-m-anisidin, N,N-Dibutyl-m-chlor-anilin. N-Ethyl-N-benzyl-m-chlor-anilin. N-Methyl-N-benzyl-m-anisidin, N-Methyl-N-benzyl-m-chlor-anilin, Phenylmorpholin, N-Ethyl-N-benzyl-m-anisidin, N-Methyl-2-phenyl-indol, 2-Phenyl-indol, 1,2-Dimethyl-indol, 2-Methyl-indol, 1-Ethyl-2-methyl-indol, N-Phenyl-piperidin, N-Methyl-2,2,3-trimethyl-tetrahydrochinolin, Dibenzylanilin, N,N-Diethyl-2-ethyl-anilin.

Weitere gut geeignete Kupplungskomponenten KH werden z.B. in US-A 4 051 117 in den Spalten 11 bis 18 sowie in den Spalten 21, 23, 25, 27, 29 und 31, in US-A 4 039 539 in den Spalten 9 bis 15 und in den deutschen Offenlegungsschriften DE-A 2 255 060, Seiten 15 bis 16, DE-A 2 255 059, Seiten 15 bis 16 und DE-A 2 255 058, Seiten 15 bis 17 genannt.

Aniline mit kleinen Substituenten an der Aminogruppe, z.B. Dimethyl-, Diethyl- oder Dipropylanilin, sind auch bei −5°C so dünnflüssig, dass man das Verfahren in Gegenwart von Wasser als einzigem Lösungsmittel durchführen kann. Bei viel grösseren Substituenten am Anilin ist unter 0°C die Viskosität so hoch, dass sich diese Kupplungskomponenten nicht mehr ausreichend suspendieren lassen. Es müssen dann gegebenenfalls andere Lösungsmittel in dem Masse zugesetzt werden, dass eine gute Rührbarkeit erreicht wird. Ein Zusatz von 10% oder mehr eines organischen Lösungsmittels, bezogen auf das Volumen von Wasser und organischer Säure, hat sich gut bewährt.

Auch durch Zusatz von Emulgatoren bzw. Dispergiermitteln kann die Feinverteilung der Reaktionspartner erreicht werden.

Es wurde gefunden, dass das neue Verfahren besonders vorteilhaft in Wasser als einzigem Lösungsmittel durchführbar ist, wenn die Kupplungskomponenten die Formel

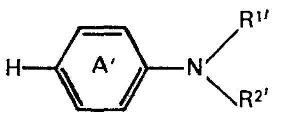

VI

haben, worin
$R^{1'}$ die Bedeutung von $R^1$ hat, mit der Massgabe, dass $R^1$ höchstens 3 C-Atome enthält,
$R^{2'}$ die Bedeutung von $R^2$ hat, mit der Massgabe, dass $R^2$ höchstens 3 C-Atome enthält und
der Ring A' beispielsweise durch $C_1$- bis $C_3$-Alkyl, Halogen, $C_1$- bis $C_3$-Alkoxy, Acetylamino, Trifluormethyl, $C_1$- bis $C_2$-Alkyl-sulfonyl oder Cyan substituiert sein kann.

Geeignete Reste $R^{1'}$ und $R^{2'}$ sind z.B. Methyl, Ethyl, Propyl, β-Methoxyethyl, Chlorethyl, β-Cyanethyl, β-Hydroxypropyl, 2-Hydroxy-3-chlorpropyl und Allyl.

Das neue Verfahren ist besonders vorteilhaft in Wasser, dem 10% oder mehr eines organischen Lösungsmittels, bezogen auf das gemeinsame Volumen von Wasser und Säure zugesetzt wurden, durchführbar, wenn die Kupplungskomponenten die Formel

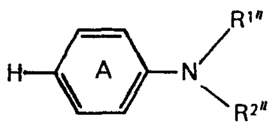

VII

haben, worin
$R^{1''}$ die für $R^1$ angegebene Bedeutung hat, bes. $C_1$- bis $C_4$-Alkyl bedeutet,
$R^{2''}$ die für $R^2$ angegebene Bedeutung hat, bes. Butyl, β-Phenoxyethyl, β-Benzoyloxyethyl, β-Phenylaminocarbonyloxyethyl, Benzyl, β-Benzyloxyethyl, β-Phenoxyethoxyethyl oder Phenylethyl bedeutet, und der Ring A die oben angegebene Bedeutung hat,
mit der Massgabe, dass mindestens ein Rest $R^{1''}$ und $R^{2''}$ mehr als 3 C-Atome enthält.

Reste mit mehr als 3 C-Atomen sind z.B.:

Butyl, Pentyl, β-Acetoxyethyl, β-Ethoxyethyl, β-Phenoxyethyl, β-Benzoyloxyethyl, β-Phenylaminocarbonyloxyethyl, Benzyl, Phenylcarbonylmethyl, β-Benzyloxyethyl, β-Phenoxyethoxyethyl, Cyclohexyl, β-Cyclohexyloxyethyl, Phenyl, Naphthyl, β-Naphthyloxyethyl, Phenylethyl.

Zur Wiedergewinnung der Lösungsmittel kann man z.B. so verfahren, dass man dieselben vor oder nach dem Abpressen des Farbstoffes abdestilliert oder mit Wasserdampf abtreibt.

Die Farbstoffe der Formel I können nach dem neuen Verfahren in besonders reiner Form hergestellt werden. Sie sind im wesentlichen frei von dunklen Neben- und Zersetzungsprodukten.

Die Herstellung von Triazolyl-Azofarbstoffen durch gleichzeitige Diazotierung und Kupplung in saurem Medium ist aus der DE-OS 2816350 und der GB-A 2009212 bekannt. In den Beispielen der deutschen Offenlegungsschrift wird in starker Mineralsäure gearbeitet, und im Beispiel der britischen Anmeldung wird die Reaktion bei pH 2 durchgeführt. Die nach diesen Beispielen hergestellten Farbstoffe enthalten unerwünschte Nebenprodukte, die im Chromatogramm in Form brauner, violetter, roter oder blauer Substanzen nachweisbar sind.

Die Herstellung von Azofarbstoffen durch gleichzeitige Diazotierung und Kupplung bei pH-Werten von 6 und darüber ist aus der US-A 2478767 bekannt. Diese Reaktion verläuft nicht vollständig, so dass die erhaltenen Suspensionen und die isolierten Farbstoffe noch viel Kupplungskomponente KH enthalten.

Ein ganz besonderer Vorteil des erfindungsgemässen Verfahrens liegt hier in der direkten Verwendbarkeit der erhaltenen Reaktionsgemische für die Quarternierung zu Farbstoffen der allgemeinen Formel

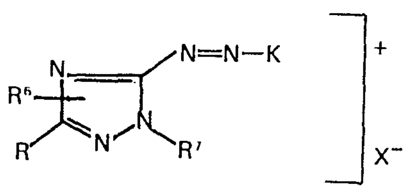

VIII,

worin
$R^6$ und $R^7$ gegebenenfalls substituierte niedere Alkyl-, Alkenyl- oder Aralkylgruppen und
$X^-$ ein Anion bedeuten und
R und K die vorstehend genannte Bedeutung haben. Man erhält mit den erfindungsgemäss hergestellten Suspensionen bzw. Lösungen quaternierte Farbstoffe mit klareren Farbtönen als mit jenen, die bei pH-Werten von 4 oder darunter hergestellt werden. Dies ist auf die oben erwähnte Abwesenheit dunkel gefärbter Nebenprodukte sowie auf den niedrigen Salzgehalt der erfindungsgemäss hergestellten Suspensionen bzw. Lösungen der Farbstoffe der Formel I zurückzuführen. Ein hoher Elektrolytgehalt, der z.B. in starker Mineralsäure vorliegt und der durch evtl. Neutralisieren vor der Quaternierung noch erhöht wird, stört die Umsetzung mit Quarternierungsmittel u.a. dadurch, dass die Löslichkeit der entstehenden Farbstoffe der Formel VIII herabgesetzt wird, so dass Einschlüsse nicht quaternierten Farbstoffes entstehen, die der Reaktion entzogen werden.

Beispiel 1

Man verrührt 1 kg Eiswasser, 210 g 3-Amino-1,2,4-triazol und 175 g $NaNO_2$ und tropft dann bei −5 bis −1°C eine Mischung von 372,5 g Diethylanilin und 245 g Eisessig ein. Man rührt 3 h bei dieser Temperatur nach und lässt dann die Temperatur unter weiterem guten Rühren auf Raumtemperatur ansteigen. Der pH-Wert der Suspension liegt bei 5,1, ihr Gehalt an Diethylanilin liegt nach dem Nachrühren bei 0,1%. Man filtriert ab,

wäscht mit Wasser salzfrei und erhält 1100 g feuchten Farbstoff der Formel

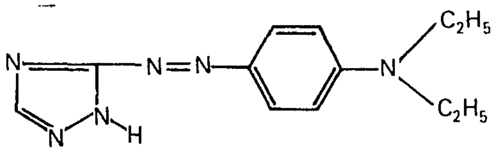

mit einem Trockengehalt von 566 g. Der Farbstoff kann als feuchte Paste oder auch ohne vorherige Isolierung direkt in Suspension quaterniert werden.

Der Reingehalt der Trockensubstanz beträgt 98,15%, der Gehalt an Diethylanilin in der Trockensubstanz liegt unter 0,1%.

Der Reingehalt wurde nach dünnschichtchromatographischer Isolierung des Farbstoffes colorimetrisch durch Vergleich mit einer 100%igen Probe ermittelt. Die Bestimmung des Reingehaltes im Rohprodukt würde evtl. enthaltene andere Azo-oder Nitrosoverbindungen sowohl bei spektroskopischer Messung als auch bei Bestimmung durch Titanreduktion mit erfassen.

Beispiel 2

Man verrührt 500 ml Wasser, 7,5 g eines Oleylalkoholpolyglykolethers, 105 g 3-Amino-1,2,4-triazol, 186,5 g Diethylanilin und 87,5 g $NaNO_2$. Dann werden bei −5°C bis −1°C 122,5 g Eisessig eingetropft. Der pH-Wert der Suspension liegt bei 5,1. Man rührt 3 h bei −5 bis 0°C nach und lässt dann die Mischung auf Raumtemperatur ansteigen. Nach dem Abpressen erhält man 1150 g feuchten Farbstoff mit einem Trockengehalt von 290,4 g und der gleichen guten Reinheit wie in Beispiel 1.

Beispiel 3

In 400 ml Wasser werden 84 g 3-Amino-1,2,4-triazol, 149 g Diethylanilin, 49 g 48%ige Schwefelsäure und 5 g eines Oleylpolyglykolethers verrührt. Dann tropft man bei −5 bis −1°C eine Lösung von 70 g $NaNO_2$ in 80 ml Wasser ein und lässt anschliessend die Temperatur des Gemisches auf Raumtemperatur ansteigen. Währenddessen tropft man bei ca. 5°C 60 g Essigsäure ein. Der pH-Wert liegt bei 4,7. Am nächsten Arbeitstag presst man ab und wäscht mit Wasser.

Man erhält den in Beispiel 1 beschriebenen Farbstoff.

Vergleichsbeispiel a

42 g 3-Amino-1,2,4-triazol, 74,5 g Diethylanilin, 35 g $NaNO_2$ und 200 ml Wasser werden durch Aussenkühlung und Eiszugabe auf −6°C abgekühlt. Dann tropft man eine Mischung von 40 g 98%iger Schwefelsäure und 40 g Eis innerhalb von 30 min ein und hält dabei durch Kühlung und Eiszugabe die Temperatur unter 3°C. Dann wird 2 h bei 0°C nachgerührt. Der pH-Wert liegt dann bei 1,8. Nach weiteren 2 h kann keine salpetrige Säure mehr nachgewiesen werden. Zur Ausfällung des Farbstoffes wird der pH-Wert durch Eintropfen von Ammoniak nach Ende der Reaktion unterhalb von 5°C von 1,8 auf 5,5 angehoben. Nach 30 min Nahrühren wird der Farbstoff abgepresst und mit 500 ml warmem Wasser gewaschen. Nach dem Trocknen hat der Farbstoff einen Reingehalt von 85,35% und enthält 2% Diethylanilin. Im Dünnschichtchromatogramm zeigt er dunkle Nebenprodukte, von denen der nach Beispiel 1 hergestellte Farbstoff im wesentlichen frei ist.

Vergleichsbeispiel b

Man arbeitet wie in Beispiel 1, jedoch werden statt 245 g Eisessig 150 g Eisessig eingesetzt. Nach dem Nachrühren beträgt der pH-Wert der Suspension 6,5 und ihr Gehalt an Diethylanilin 2,5%. Der getrocknete Farbstoff (528 g) enthält 4,5% Diethylanilin und sein Reingehalt liegt bei 88,9%.

Vergleichsbeispiel c

Diethylanilin wird so umgesetzt, wie es in der DE-A 2 816 350, Beispiel 2 beschrieben ist. Es wird eine von Rückstand freie Lösung erhalten, aus der durch Abstumpfen des pH-Wertes der in Beispiel 1 beschriebene Farbstoff ausfällt, welcher nach dem Trocknen einen Reingehalt von 61,95% und einen Gehalt an Diethylanilin von 3% besitzt.

Beispiel 4

Man verrührt 1 l Methanol, 210 g 3-Amino-1,2,4-triazol, 150 g Eisessig und 672,5 g N-Ethyl-N-benzoyloxyethyl-anilin (Reingehalt 97,8%) und tropft bei −5 bis −1°C innerhalb von 30 min eine Lösung von 175 g $NaNO_2$ in 210 ml Wasser ein. Anschliessend werden binnen 45 min bei −5 bis −1°C noch 150 g Eisessig eingetropft. Man lässt die Temperatur der Mischung langsam auf 15°C ansteigen und tropft 1000 ml Wasser ein, rührt noch 3 h bei 15°C und dann bei Raumtemperatur bis zum nächsten Morgen. Der pH-Wert der Mischung liegt bei 5,2. Der Restgehalt an Kupplungskomponente liegt bei 0,4%. Man saugt ab und wäscht mit Wasser salzfrei. Dabei erhält man 1400 g feuchten Farbstoff der Formel:

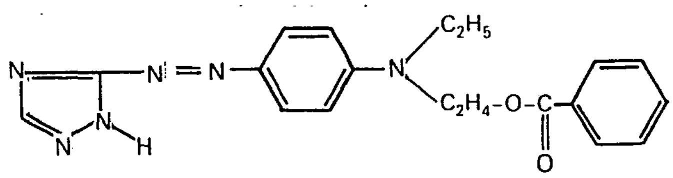

Die Trockenausbeute beträgt 874 g.

Der Farbstoff ist lt. Dünnschichtchromatogramm im wesentlichen frei von braunen, roten, violetten und blauen Nebenprodukten.

Statt in 1 l Methanol kann man z.B. auch in einer Mischung aus 250 ml Dimethylformamid und 250 ml Isopropanol arbeiten.

Man kann auch so vorgehen, dass man die Suspension, wenn sie eine Temperatur von 15°C erreicht hat, langsam auf 40°C erwärmt, 3 h bei dieser Temperatur nachrührt, absaugt und mit heissem Wasser wäscht.

Beispiel 5

Man verrührt 84 g 3-Amino-1,2,4-triazol in 400 ml Wasser mit 70 g $NaNO_2$ und tropft bei −5°C langsam eine Mischung von 160 g N-Methyl-N,β-cyanethyl-anilin und 98 g Eisessig ein, rührt 3 h bei −5°C nach und lässt dann die Temperatur der Mischung auf Raumtemperatur ansteigen. Nach Rühren über Nacht hat die Suspension einen pH-Wert von 5. Der Restgehalt an Kupplungskomponente liegt bei 0,5%. Man saugt ab und wäscht mit Wasser salzfrei. Nach Trocknen im Vakuum erhält man 230,1 g gelben Farbstoff der Formel:

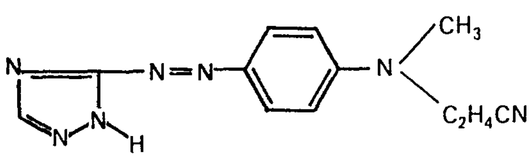

Beispiel 6

Man verrührt 400 ml Wasser mit 84 g 3-Amino-1,2,4-triazol und 70 g $NaNO_2$, tropft bei −5 bis −1°C eine Lösung von 121 g Dimethylanilin in 98 g Eisessig ein und rührt 3 h bei dieser Temperatur nach. Dann lässt man die Temperatur auf Raumtemperatur ansteigen und rührt nach bis zum nächsten Morgen. Der pH-Wert der Suspension liegt bei 5. Ihr Gehalt an Dimethylanilin liegt unter 0,1%. Man saugt ab und wäscht mit Wasser salzfrei. Man erhält 300 g feuchten Farbstoff der Formel:

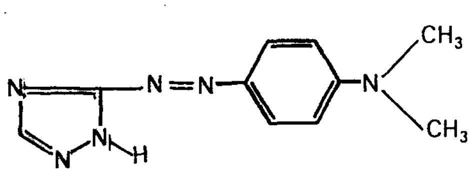

Die Trockenausbeute beträgt 181 g.

Beispiel 7

1000 ml Methanol werden mit 210 g 3-Amino-1,2,4-triazol, 512,5 g N,N-Di-n-butyl-anilin und 150 g Eisessig verrührt. Bei −5 bis −1°C tropft man innerhalb von 30 min eine Lösung von 175 g $NaNO_2$ in 210 ml Wasser und anschliessend binnen 45 min bei −5 bis −1°C 150 g Eisessig ein. Man lässt die Mischung langsam auf 15°C ansteigen und tropft dann 1000 ml Wasser ein, rührt 3 h bei 15°C, lässt die Temperatur auf Raumtemperatur ansteigen und rührt über Nacht. Der Restgehalt an Dibutylanilin liegt bei 0,5%, der pH-Wert bei 5,5. Man saugt ab und wäscht mit Wasser salzfrei. Man erhält 1300 g feuchten gelben Farbstoff der Formel:

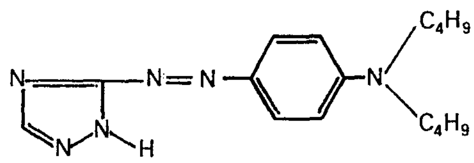

Die Trockenausbeute beträgt 705 g.

Beispiel 8

1000 ml Methanol werden mit 220 g Aminotriazol, 150 g Eisessig und 495 g N-Methyl-N-benzylanilin verrührt. Bei −5°C bis −1°C tropft man in 30 min eine Lösung von 183,5 g $NaNO_2$ in 220 ml Wasser und anschliessend binnen 45 min ebenfalls bei −5°C bis −1°C 150 g Eisessig ein. Man lässt die Mischung langsam auf 15°C ansteigen und tropft dann 1000 ml Wasser ein, rührt 3 h bei 15°C und dann über Nacht bei Raumtemperatur. Der Restgehalt an Methylbenzylanilin in der Suspension liegt bei 0,4%. Der pH-Wert beträgt 5. Man saugt ab und wäscht mit Wasser salzfrei. Dabei werden 1350 g feuchter Farbstoff mit einem Trockengehalt von 684 g erhalten. Die feuchte Farbpaste kann sofort weiter alkyliert und quaterniert werden, beispielsweise mit Dimethylsulfat.

Sie enthält den Farbstoff der Formel:

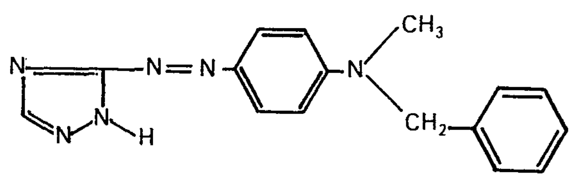

Er ist lt. Dünnschichtchromatogramm im wesentlichen frei von braunen, roten, violetten oder blauen Nebenprodukten. Derartige dunkle Nebenprodukte treten z.B. auf, wenn man in starker Säure arbeitet, wie es beispielsweise in den Ausführungsbeispielen zu DE-A 2 816 350 angegeben wird.

Die nach dünnschichtchromatographischer Isolierung durch colorimetrische Messung gegen einen 100%igen Vergleich ermittelte Reinausbeute liegt bei 90% der Theorie.

Arbeitet man gemäss Beispiel 2 der DE-A 2 816 350 in einem Gemisch von Ameisensäure und starker Schwefelsäure, so erhält man eine Reinausbeute von 77% der Theorie. Die Ausbeute wird ebenfalls colorimetrisch nach dünnschichtchromatographischer Abtrennung ermittelt.

Der so erhaltene Farbstoff enthält ausserdem dunkle Nebenprodukte.

Beispiel 9

Der in Beispiel 8 beschriebene Farbstoff kann auch in guter Reinheit und Ausbeute erhalten werden, wenn man statt der in Beisp. 8 angegebenen ersten 150 g Essigsäure 122,5 48%ige

Schwefelsäure einsetzt und nach den dort angegebenen Bedingungen weiterarbeitet. Der pH-Wert liegt nach Ende der Umsetzung bei 5,3.

Beispiel 10

Der in Beispiel 8 beschriebene Farbstoff wird ebenfalls in guter Reinheit und Ausbeute erhalten, wenn man die dort angegebenen 1000 ml Methanol durch eine Lösung von 25 g eines aromatischen Polyglykolethers in 2 l Wasser ersetzt und auf die Zugabe der dort vorgeschriebenen 1000 ml Wasser verzichtet. Die Arbeitsweise entspricht ansonsten der von Beispiel 8.

Beispiel 11

In überraschend kleinem Reaktionsvolumen und bei guter Rührbarkeit erhält man in guter Ausbeute und Reinheit den Farbstoff des Beispiels 8, wenn man statt der dort angegebenen 1000 ml Methanol eine Mischung von 150 ml Dimethylformamid und 150 ml Isopropanol einsetzt und weiter wie dort beschrieben arbeitet.

Der Farbstoff fällt in hoher Reinheit und in einer sich günstig auf die Reaktionsgeschwindigkeit bei der Umsetzung mit Alkylierungsmitteln in Suspension auswirkenden Feinverteilung an, wenn man, wie vorstehend beschrieben, in 150 ml Dimethylformamid und 150 ml Isopropanol arbeitet, 12,5 g eines Oleylalkoholpolyglykolethers zusetzt und statt der 1000 ml Wasser eine Lösung von 12,5 g Oleylalkoholpolyglykolether in 1000 ml Wasser einsetzt.

Beispiel 12

Man verrührt 1500 ml Isopropanol, 530 g N-Ethyl-N-benzyl-anilin, 220,5 g 3-Amino-1,2,4-triazol und 150 g Eisessig, tropft bei −5 bis −1°C innerhalb von 30 min eine Lösung von 183,8 g $NaNO_2$ in 230 ml Wasser und anschliessend bei der gleichen Temperatur binnen 45 min 150 g Eisessig ein. Nun lässt man die Temperatur der Mischung langsam auf 15°C ansteigen und gibt nochmals 300 ml Isopropanol sowie 500 ml Oxypropionitril hinzu. Dann wird 3 h bei 15°C und anschliessend über Nacht bei Raumtemperatur gerührt. Sobald die Suspension dickflüssig wird, gibt man langsam 2000 ml kaltes Wasser zu. Der pH-Wert liegt bei 5,2. Nach dem Abpressen und Waschen mit Wasser erhält man 1500 g feuchten Farbstoff der Formel

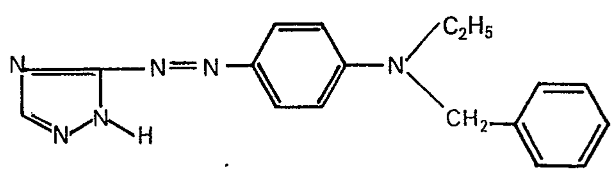

Die Trockenausbeute beträgt 711 g.

Der Farbstoff ist lt. Dünnschichtchromatogramm im wesentlichen frei von dunkel gefärbten Nebenprodukten, wie sie enthalten sind, wenn man nicht bei pH-Werten von $4 < pH < 6$, sondern z.B. in starken mineralsauren Lösungen arbeitet.

Beispiel 13

In 400 ml Methanol rührt man 60 ml Dimethylformamid, 212 g N-Ethyl-N-benzyl-anilin, 84 g 3-Amino-1,2,4-triazol und 49 g 48%ige Schwefelsäure ein. Dazu werden bei −5 bis −1°C binnen 30 min 70 g $NaNO_2$, gelöst in 80 ml Wasser, getropft. Die Suspension wird nun langsam auf 15°C erwärmt. Währenddessen tropft man zwischen 5 und 10°C langsam 60 ml Eisessig ein. Bei 15°C wird eine Lösung von 5 g eines Oleylalkoholpolyglykolethers in 400 ml Wasser eingetropft. Dann rührt man bis zum nächsten Arbeitstag bei Raumtemperatur. Der pH-Wert liegt bei 5,3.

Man erhält den in Beispiel 12 beschriebenen Farbstoff in guter Ausbeute.

Beispiel 14

Man verrührt 800 ml Wasser, 800 ml Isopropanol, 20 g eines Oleylalkoholpolyglykolethers, 424 g N-Ethyl-N-benzyl-anilin und 120 g Eisessig mit 176,2 g 3-Amino-1,2,4-triazol und tropft bei −5 bis −1°C binnen 30 min eine Lösung von 147 g $NaNO_2$ in 165 ml Wasser und anschliessend binnen 45 min bei der gleichen Temperatur 120 g Eisessig ein. Dann lässt man die Temperatur der Mischung unter gutem Rühren langsam auf 15°C ansteigen und gibt nach und nach noch 120 g Dimethylformamid und anschliessend 750 ml Isopropanol hinzu. Dann erwärmt man langsam bis auf 40°C, rührt 3 h bei dieser Temperatur und gibt hiernach noch 750 ml Wasser zu. Dann wird abgesaugt und mit warmem Wasser salzfrei gewaschen. Man erhält den in Beispiel 12 beschriebenen Farbstoff in hoher Reinheit.

Beispiel 15

Man arbeitet wie in Beispiel 12, setzt jedoch statt 530 g N-Ethyl-N-benzyl-anilin 362 g 1,2-Dimethyl-indol ein.

Man erhält den Farbstoff der Formel:

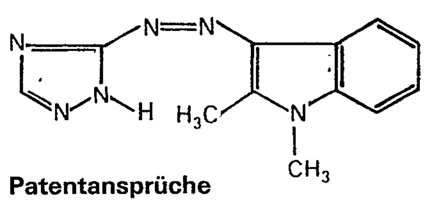

**Patentansprüche**

Anspruch 1

Verfahren zur Herstellung von Farbstoffen der allgemeinen Formel

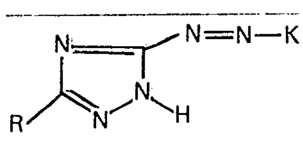

worin
R Wasserstoff, Alkyl, Aralkyl, Cycloalkyl oder Aryl und
K den Rest einer Kupplungskomponente HK bedeuten,
durch gleichzeitige Umsetzung von Aminotriazolen der Formel

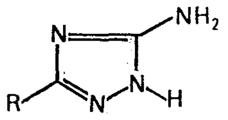

worin
R die oben angegebene Bedeutung hat,
Natriumnitrit und Kupplungskomponenten HK in Wasser oder wässrigen organischen Lösungsmitteln, dadurch gekennzeichnet, dass die Umsetzung bei pH-Werten von $4 < pH < 6$ erfolgt.

Anspruch 2
Verfahren nach Anspruch 1, dadurch gekennzeichnet, dass man als organisches Lösungsmittel ein mit Wasser mischbares organisches Lösungsmittel verwendet.

Anspruch 3
Verfahren nach Anspruch 1, dadurch gekennzeichnet, dass man als organisches Lösungsmittel ein in Wasser unlösliches organisches Lösungsmittel verwendet.

Anspruch 4
Verfahren nach Anspruch 1, dadurch gekennzeichnet, dass die Umsetzung bei einem pH-Wert von 4,5–5,5 erfolgt.

Anspruch 5
Verfahren nach Ansprüchen 1–4, dadurch gekennzeichnet, dass als Säure Salzsäure, Schwefelsäure, Ameisensäure, Essigsäure, Propionsäure oder deren Gemische und insbesondere Essigsäure oder ein Gemisch aus Essigsäure und Schwefelsäure eingesetzt werden.

Anspruch 6
Verfahren nach Ansprüchen 1–6, dadurch gekennzeichnet, dass man in einem Lösungsmittel ein Aminotriazol, eine Säure und eine Kupplungskomponente vorlegt und dann eine wässrige Lösung von Natriumnitrit eintropft.

Anspruch 7
Verfahren nach Ansprüchen 1–6, dadurch gekennzeichnet, dass man in einem Lösungsmittel ein Aminotriazol und Natriumnitrit vorlegt und eine Mischung aus einer Kupplungskomponente und Säure eintropft.

Anspruch 8
Verfahren nach Ansprüchen 1–8, dadurch gekennzeichnet, dass als Lösungsmittel Wasser verwendet wird und die Kupplungskomponente HK eine Verbindung der Formel

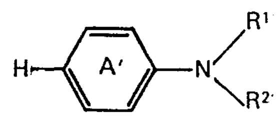

ist, worin
$R^{1'}$ für Wasserstoff oder eine gesättigte oder ungesättigte $C_1$- bis $C_3$-Alkylgruppe, die durch $R^{5'}$ substituiert sein kann,
$R^{2'}$ für eine gesättigte oder ungesättigte $C_1$- bis $C_3$-Alkylgruppe, die durch $R^{5'}$ substituiert sein kann und
$R^{5'}$ für Methoxy, Ethoxy, Cyan, Acetoxy, Dimethylamino, Methoxycarbonyloxy, Methoxycarbonyl, Aminocarbonyl oder Methylaminocarbonyl stehen und
Der Ring A′ beispielsweise durch $C_1$- bis $C_3$-Alkyl, Halogen, $C_1$- bis $C_3$-Alkoxy, Acetylamino, Trifluormethyl, $C_1$- bis $C_2$-Alkylsulfonyl oder Cyan substituiert sein kann,
mit der Massgabe, dass die Reste $R^{1'}$ und $R^{2'}$ nicht mehr als 3 C-Atome enthalten.

Anspruch 9
Verfahren nach Ansprüchen 1–8, dadurch gekennzeichnet, dass das Lösungsmittel Wasser ist, dem 10% oder mehr, bezogen auf das gemeinsame Volumen von Wasser und Säure, eines organischen Lösungsmittels zugesetzt werden, und die Kupplungskomponente KH eine Verbindung der Formel

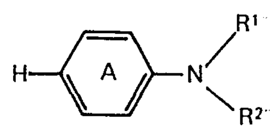

darstellt, worin
$R^{1''}$ für H oder eine gesättigte oder ungesättigte $C_1$- bis $C_8$-Alkylgruppe, die durch $R^5$ substituiert sein kann,
$R^{2''}$ für Phenyl, Naphthyl oder eine gesättigte oder ungesättigte $C_1$- bis $C_8$-Alkylgruppe, die beispielsweise durch $R^5$ substituiert sein kann,
$R^5$ für Halogen, Hydroxy, $C_1$- bis $C_4$-Alkoxy, Cyan, Acetoxy, Di-($C_1$- bis $C_3$-alkyl)-amino, $C_1$- bis $C_2$-Alkoxycarbonyloxy, $C_1$- bis $C_4$-Alkoxycarbonyl, Aminocarbonyl, Mono- und Di-($C_1$- bis $C_2$-alkyl)-aminocarbonyl, Cyclohexyl, Cyclohexyloxy, Phenyl, Naphthyl, Phenoxy, Naphthoxy, Benzoyloxy, Phenoxyalkyloxy, Phenoxycarbonyloxy, Phenylaminocarbonyloxy, Benzoyl oder Thiophenyl stehen,
die aromatischen Ringe in $R^{1''}$, $R^{2''}$ und $R^5$ ihrerseits Substituenten, wie Chlor, Methyl, Ethyl, Methoxy, Ethoxy, Phenyl oder Cyclohexyl, tragen können,
$R^{1''}$ und $R^{2''}$ zusammen mit dem N-Atom einen Ring, beispielsweise zum Pyrrolidin, Piperidin, Piperazin oder Morpholin schliessen können,
$R^{1''}$ und $R^{2''}$ zum Ring A ringgeschlossen sein können, so dass z.B. ein gegebenenfalls durch Methyl, Chlor oder Methoxy substituiertes Indolin-, Tetrahydrochinolin-, Benzomorpholin- oder Carbazolringsystem entsteht,

der Ring A beispielsweise durch $C_1$- bis $C_4$-Alkyl, Halogen, $C_1$- bis $C_3$-Alkoxy, Acetylamino, Trifluormethyl, $C_1$- bis $C_2$-Alkylsulfonyl oder Cyan substituiert sein kann und zwei benachbarte Substituenten des Ringes A miteinander ringgeschlossen sein können, so dass zusammen mit dem Ring A ein Tetrahydronaphthalin-, ein Naphthalin- oder ein heterocyclisches Ringsystem entsteht, mit der Massgabe, dass mindestens einer der Reste $R^{1''}$ und $R^{2''}$ mehr als 3 C-Atome enthält.

Anspruch 10

Verfahren nach Ansprüchen 1-8, dadurch gekennzeichnet, dass die Kupplungskomponente KH eine Verbindung der Formel

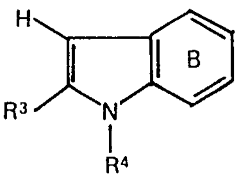

ist, worin

$R^3$ für Methyl, Ethyl oder Phenyl und

$R^4$ für H, Benzyl oder Alkyl, welches gegebenenfalls durch Halogen, Hydroxy, $C_1$- bis $C_4$-Alkoxy, Cyan, Acetoxy, Di-($C_1$- bis $C_3$-alkyl)-amino, $C_1$- bis $C_2$-Alkoxycarbonyloxy, $C_1$- bis $C_4$-Alkoxycarbonyl, Aminocarbonyl, Mono- und Di-($C_1$- bis $C_2$-alkyl)-aminocarbonyl, Cyclohexyl, Cyclohexyloxy, Phenyl, Naphthyl, Phenoxy, Naphthoxy, Benzoyloxy, Phenoxyalkyloxy, Phenoxycarbonyloxy, Phenylaminocarbonyloxy, Benzoyl oder Thiophenyl substituiert sein kann, stehen

und der Ring E durch $C_1$- bis $C_4$-Alkyl, Halogen, $C_1$- bis $C_3$-Alkoxy, Acetylamino, Trifluormethyl, $C_1$- bis $C_2$-Alkylsulfonyl oder Cyan substituiert sein kann.

## Claims

Claim 1

Process for the preparation of dyestuffs of the general formula

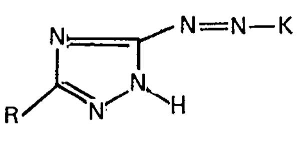

wherein

R denotes hydrogen, alkyl, aralkyl, cycloalkyl or aryl and

K denotes the radical of a coupling component HK, by simultaneous reaction of aminotriazoles of the formula

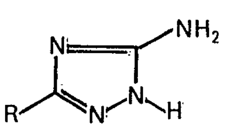

wherein

R has the abovementioned meaning, sodium nitrite and coupling components HK in water or aqueous organic solvents, characterised in that the reaction is carried out at pH values of $4 < pH < 6$.

Claim 2

Process according to Claim 1, characterised in that the organic solvent used is a water-miscible organic solvent.

Claim 3

Process according to Claim 1, characterised in that the organic solvent used is a water-insoluble organic solvent.

Claim 4

Process according to Claim 1, characterised in that the reaction is carried out at a pH value of 4.5-5.5.

Claim 5

Process according to Claims 1-4, characterised in that the acid employed is hydrochloric acid, sulphuric acid, formic acid, acetic acid, propionic acid or mixtures of these and especially acetic acid or a mixture of acetic acid and sulphuric acid.

Claim 6

Process according to Claims 1-6, characterised in that an aminotriazole, an acid and a coupling component are initially introduced into a solvent and an aqueous solution of sodium nitrite is then added dropwise.

Claim 7

Process according to Claims 1-6, characterised in that an aminotriazole and sodium nitrite are initially introduced into a solvent and a mixture of a coupling component and acid is added dropwise.

Claim 8

Process according to Claims 1-8, characterised in that water is used as the solvent and the coupling component HK is a compound of the formula

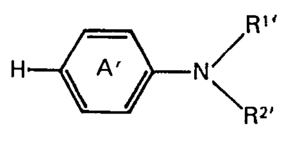

wherein

$R^{1'}$ represents hydrogen or a saturated or unsaturated $C_1$- to $C_3$-alkyl group, which can be substituted by $R^{5'}$,

$R^{2'}$ represents a saturated or unsaturated $C_1$- to $C_3$-alkyl group, which can be substituted by $R^{5'}$ and

$R^{5'}$ represents methoxy, ethoxy, cyano, acetoxy, dimethylamino, methoxycarbonyloxy, methoxycarbonyl, aminocarbonyl or methylaminocarbonyl and

the ring A′ can, for example, be substituted by $C_1$- to $C_3$-alkyl, halogen, $C_1$- to $C_3$-alkoxy, acetyl-

amino, trifluoromethyl, $C_1$- to $C_2$-alkyl-sulphonyl or cyano,
with the proviso that the radicals $R^{1'}$ and $R^{2'}$ do not contain more than 3 C atoms.

Claim 9
Process according to Claims 1-8, characterised in that the solvent is water to which 10% or more, relative to the combined volume of water and acid, of an organic solvent is added and the coupling component KH represents a compound of the formula

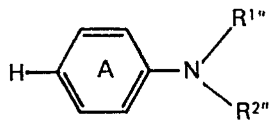

wherein
$R^{1''}$ represents H or a saturated or unsaturated $C_1$- to $C_8$-alkyl group, which can be substituted by $R^5$,
$R^{2''}$ represents phenyl, naphthyl or a saturated or unsaturated $C_1$- to $C_8$-alkyl group, which can be substituted, for example by $R^5$,
$R^5$ represents halogen, hydroxyl, $C_1$- to $C_4$-alkoxy, cyano, acetoxy, di-($C_1$- to $C_3$-alkyl)-amino, $C_1$- to $C_2$-alkoxycarbonyloxy, $C_1$- to $C_4$-alkoxycarbonyl, aminocarbonyl, mono- and di-($C_1$- to $C_2$-alkyl)-aminocarbonyl, cyclohexyl, cyclohexyloxy, phenyl, naphthyl, phenoxy, naphthoxy, benzoyloxy, phenoxyalkyloxy, phenoxycarbonyloxy, phenylaminocarbonyloxy, benzoyl or thiophenyl and
the aromatic rings in $R^{1''}$, $R^{2''}$ and $R^5$ can, in turn, carry substituents such as chlorine, methyl, ethyl, methoxy, ethoxy, phenyl or cyclohexyl,
$R^{1''}$ and $R^{2''}$ together with the N atom can close a ring, for example to give pyrrolidine, piperidine, piperazine or morpholine,
$R^{1''}$ and $R^{2''}$ can be cyclised onto the ring A, so that, for example, an optionally methyl-, chlorine- or methoxy-substituted indoline, tetrahydroquinoline, benzomorpholine or
carbazole ring system ist formed,
the ring A can, for example, be substituted by $C_1$- to $C_4$-alkyl, halogen, $C_1$- to $C_3$-alkoxy, acetylamino, trifluoromethyl, $C_1$- to $C_2$-alkyl-sulphonyl or cyano, and two adjacent substituents of the ring A can be cyclised with one another so that, together with the ring A, a tetrahydronaphthalene, a naphthalene or a heterocyclic ring system is formed,
with the proviso that at least one of the radicals $R^{1''}$ and $R^{2''}$ contains more than 3 C atoms.

Claim 10
Process according to Claims 1-8, characterised in that the coupling component KH is a compound of the formula

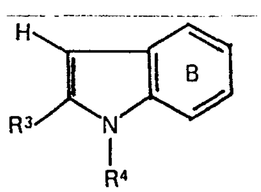

wherein
$R^3$ represents methyl, ethyl or phenyl and
$R^4$ represents H, benzyl or alkyl which can optionally be substituted by halogen, hydroxyl, $C_1$- to $C_4$-alkoxy, cyano, acetoxy, di-($C_1$- to $C_3$-alkyl)-amino, $C_1$- to $C_2$-alkoxycarbonyloxy, $C_1$- to $C_4$-alkoxycarbonyl, aminocarbonyl, mono- and di-($C_1$- to $C_2$-alkyl)-aminocarbonyl, cyclohexyl, cyclohexyloxy, phenyl, naphthyl, phenoxy, naphthoxy, benzoyloxy, phenoxyalkyloxy, phenoxycarbonyloxy, phenylaminocarbonyloxy, benzoyl or thiophenyl, and
the ring B can be substituted by $C_1$- to $C_4$-alkyl, halogen, $C_1$- to $C_3$-alkoxy, acetylamino, trifluoromethyl, $C_1$- to $C_2$-alkylsulphonyl or cyano.

**Revendications**

Revendication 1
Procédé pour la fabrication de colorants azoïques de formule

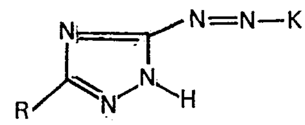

dans laquelle
R représente l'hydrogène ou un reste alkyle, arylalkyle, cycloalkyle ou aryle
K représente le reste d'un composant de copulation,
par réaction simultanée d'aminotriazoles de formule

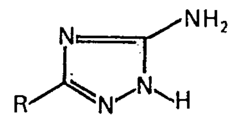

de nitrite de sodium et de composants de copulation de formule

HK

dans l'eau ou des solvants organiques aqueux à des pH compris entre 4 et 6.

Revendication 2
Procédé selon la revendication 1, caractérisé en ce que l'on utilise comme solvant organique un solvant organique miscible avec l'eau.

Revendication 3
Procédé selon la revendication 1, caractérisé en ce que l'on utilise comme solvant organique un solvant organique insoluble dans l'eau.

Revendication 4
Procédé selon la revendication 1, caractérisé en ce que la réaction a lieu à un pH de 4,5-5,5.

Revendication 5
Procédé selon les revendications 1-4, caractérisé en ce que l'on utilise comme acide l'acide

chlorhydrique, l'acide sulfurique, l'acide formique, l'acide acétique, l'acide propionique, ou leurs mélanges, et en particulier l'acide acétique ou un mélange d'acide acétique et d'acide sulfurique.

Revendication 6

Procédé selon les revendications 1-5, caractérisé en ce que l'on place dans un solvant un aminotriazole, un acide et un composant de copulation et on ajoute ensuite goutte à goutte une solution aqueuse de nitrite de sodium.

Revendication 7

Procédé selon les revendications 1-6, caractérisé en ce que l'on place dans un solvant un aminotriazole et du nitrite de sodium et on ajoute goutte à goutte un mélange d'un composant de copulation et d'acide.

Revendication 8

Procédé selon les revendications 1-7, caractérisé en ce que l'on utilise l'eau comme solvant et le composant de copulation est un composé de formule

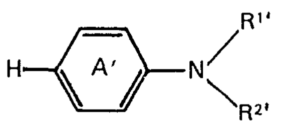

dans laquelle

$R^{1'}$ représente H ou un groupe alkyle saturé ou insaturé en $C_1$–$C_3$, qui peut être substitué par $R^{5'}$,

$R^{2'}$ représente un groupe alkyle saturé ou insaturé en $C_1$–$C_3$ qui peut être substitué par $R^{5'}$ et

$R^{5'}$ représente un groupe méthoxy, éthoxy, cyano, acétoxy, diméthylamino, méthoxycarbonyloxy, méthoxycarbonyle, aminocarbonyle ou méthylaminocarbonyle,

le noyau A′ peut être substitué, par exemple, par un reste alkyle en $C_1$–$C_3$, halogéno, alcoxy en $C_1$–$C_3$, acétylamino, trifluorométhyle, alkylsulfonyle en $C_1$–$C_2$ ou cyano,

avec la condition que les restes $R^{1'}$ et $R^{2'}$ ne contiennent pas plus de 3 atomes de carbone.

Revendication 9

Procédé selon les revendications 1-8, caractérisé en ce que le solvant est l'eau à laquelle on a ajouté 10% ou plus d'un solvant organique, par rapport au volume total d'eau et d'acide, et le composant de copulation est un composé de formule

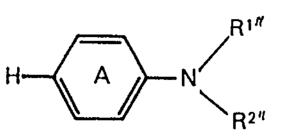

dans laquelle

$R^{1''}$ représente H ou un groupe alkyle saturé ou insaturé en $C_1$–$C_8$ qui peut être substitué par $R^5$ et

$R^{2''}$ représente un groupe phényle ou naphtyle ou un groupe alkyle saturé ou insaturé en $C_1$–$C_8$ qui peut être substitué par $R^5$,

$R^5$ représente un halogène ou un groupe hydroxy, alcoxy en $C_1$–$C_4$, cyano, acétoxy, di-(alkyl en $C_1$–$C_3$)amino, (alcoxy en $C_1$–$C_2$)-carbonyloxy, (alcoxy en $C_1$–$C_4$)carbonyle, aminocarbonyle, mono- et di-(alkyl en $C_1$–$C_2$)aminocarbonyle, cyclohexyle, cyclohexyloxy, phényle, naphtyle, phénoxy, naphtoxy, benzoyloxy, phénoxyalkyloxy, phénoxycarbonyloxy, phénylaminocarbonyloxy, benzoyle ou thiophényle,

les noyaux aromatiques dans $R^{1''}$, $R^{2''}$ et $R^5$ peuvent porter à leur tour des substituants tels que chloro, méthyle, éthyle, méthoxy, éthoxy, phényle ou cyclohexyle,

$R^{1''}$ et $R^{2''}$, pris avec l'atome d'azote, peuvent former un cycle, par exemple pyrrolidine, pipéridine, pipérazine ou morpholine,

$R^{1''}$ et $R^{2''}$ peuvent être cyclisés avec le noyau A, de sorte qu'il se forme, par exemple, un système cyclique indoline, tétrahydroquinoléine, benzomorpholine ou carbazole éventuellement substitué par méthyle, chloro ou méthoxy,

le noyau A peut être substitué, par exemple, par un reste alkyle en $C_1$–$C_4$, halogéno, alcoxy en $C_1$–$C_3$, acétylamino, trifluorométhyle, alkylsulfonyle en $C_1$–$C_2$ ou cyano, et deux substituants voisins du noyau A peuvent être cyclisés ensemble, de manière qu'il se forme avec le noyau A un système cyclique tétrahydronaphtalène ou naphtalène ou un système hétérocyclique,

avec la condition qu'au moins un des restes $R^{1''}$ et $R^{2''}$ contienne plus de 3 atomes de carbone.

Revendication 10

Procédé selon les revendication 1-8, caractérisé en ce que le composant de copulation KH est un composé de formule

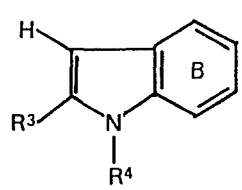

dans laquelle

$R^3$ représente un reste méthyle, éthyle ou phényle et

$R^4$ représente H ou un reste benzyle ou alkyle qui peut être substitué par exemple par $R^5$

et le noyau B peut être substitué par un reste alkyle en $C_1$–$C_4$, halogéno, alcoxy en $C_1$–$C_3$, acétylamino trifluorométhyle, alkylsulfonyle en $C_1$–$C_2$ ou cyano.